(19) **Europäisches Patentamt / European Patent Office / Office européen des brevets**

(11) **EP 3 150 969 B1**

(12) # EUROPEAN PATENT SPECIFICATION

(45) Date of publication and mention
of the grant of the patent:
**17.07.2019 Bulletin 2019/29**

(21) Application number: **15800541.3**

(22) Date of filing: **29.05.2015**

(51) Int Cl.:
***G01D 5/353*** (2006.01)

(86) International application number:
**PCT/ES2015/070424**

(87) International publication number:
**WO 2015/181432 (03.12.2015 Gazette 2015/48)**

(54) **SENSOR FOR MEASURING THE DISTRIBUTION OF PHYSICAL MAGNITUDES IN AN OPTICAL FIBRE AND ASSOCIATED MEASURING METHOD**

SENSOR ZUR MESSUNG DER VERTEILUNG VON PHYSIKALISCHEN GRÖSSEN IN EINER OPTISCHEN FASER UND ZUGEHÖRIGES MESSVERFAHREN

CAPTEUR DE MESURE DE LA DISTRIBUTION D'AMPLITUDES PHYSIQUES DANS UNE FIBRE OPTIQUE ET PROCÉDÉ DE MESURE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 ES 201430832**

(43) Date of publication of application:
**05.04.2017 Bulletin 2017/14**

(73) Proprietor: **Universidad Pública De Navarra
31006 Pamplona Navarra (ES)**

(72) Inventors:
  • **LOAYSSA LARA, Alayn**
    **31006 Pamplona (Navarra) (ES)**
  • **SAGUES GARCÍA, Miguel**
    **31006 Pamplona (Navarra) (ES)**
  • **URRICELQUI POLVORINOS, Javier**
    **31006 Pamplona (Navarra) (ES)**

(74) Representative: **Manuel Illescas y Asociados, S.L.U.
C/ Príncipe de Vergara 197, Oficina 1°A
28002 Madrid (ES)**

(56) References cited:
  EP-A1- 2 708 856          WO-A1-2014/012411
  US-A1- 2012 101 592       US-A1- 2013 011 144
  US-A1- 2014 218 717

  • XIAOYI BAO ET AL: "Recent Progress in Brillouin Scattering Based Fiber Sensors", SENSORS, vol. 11, no. 12, 7 December 2011 (2011-12-07), pages 4152-4187, XP055063132, ISSN: 1424-8220, DOI: 10.3390/s110404152
  • URRICELQUI, J. ET AL.: 'Dynamic BOTDA measurements based on Brillouin phase-shift and RF demodulation' OPTICS EXPRESS 26942 vol. 20, no. 24, XP055239763
  • URRICELQUI, J. ET AL.: 'BOTDA measurements tolerant to non-local effects by using a phase-modulated probe and RF demodulation' OPTICS EXPRESS 17186 vol. 21, no. 14, XP055239764

## Description

## FIELD OF THE INVENTION

The present invention relates to distributed optical fibre sensors based on the stimulated Brillouin scattering non-linear effect (SBS) and, more specifically, to sensors based on the Brillouin optical time-domain analysis (BOTDA) technique.

The object of the invention is, therefore, a sensor or measuring device for measuring the distribution of physical magnitudes in an optical fibre, which is based on an enhanced BOTDA technique, and an associated measurement method. The measuring device according to the invention has enhanced performance compared to devices of the prior art because it includes elements capable of generating Brillouin spectra whose characteristics may vary along said optical fibre.

## BACKGROUND OF THE INVENTION

Brillouin distributed sensors of the BOTDA type are based on the use of the stimulated Brillouin scattering non-linear effect (SBS) in an optical fibre whereby two waves or optical signals, respectively called pump wave and Stokes wave, propagate in opposite directions in a section of optical fibre, give rise to an acoustic wave that gives rise to energy transfer from the pump wave to the Stokes wave. The result of this process is that the Stokes wave is amplified and the pump wave is attenuated. This occurs whenever the optical frequency separation of the pump and Stokes waves is close to the so-called Brillouin Frequency Shift (BFS), characteristic of the optical fibre used. Thus, the effect gives rise to a gain spectrum for waves propagating in the opposite direction to the pump wave and which peaks at the optical frequency given by subtraction between the optical frequency of the pump and the BFS. This spectrum, also called Brillouin gain spectrum, has the shape of a Lorentz function and a linewidth of the order of several tens of megahertz, which is given by the parameter called Brillouin linewidth and is inherent to each fibre. Simultaneously, a Brillouin attenuation spectrum appears with analogous characteristics for waves propagated in the opposite direction to the Stokes wave with a similar shape and linewidth.

The general concept of the BOTDA technique is described in patent US4997277. In its application to sensor development, it takes advantage of the fact that the BFS depends on the physical magnitudes to which the fibre is subjected, particularly to temperature ($T$) and fibre elongation ($\varepsilon$). Specifically, we find that the BFS has an approximately linear dependence on these parameters that can be expressed as $BFS = BFS_0 + C_T T + C_\varepsilon \varepsilon$, where $BFS_0$ is the BFS at a given reference temperature and without deformation of the fibre, and $C_T$ and $C_\varepsilon$ are dependence coefficients with temperature and elongation, respectively. Therefore, the temperature or elongation to which a fibre is subjected can be obtained by simply measuring the Brillouin gain spectrum and determining its maximum. To this end, the pump wave is introduced through one end of the fibre and, through the other end, an auxiliary probe wave which acts as a Stokes wave in the Brillouin interaction. The method would consist of measuring the gain experienced by the probe wave on traversing the optical fibre at different optical frequency separations between the two. Likewise, the Brillouin attenuation spectrum could be used and have the probe wave act as the pump wave in the Brillouin interaction. With this we could determine the average temperature or elongation to which the section of optical fibre used is subjected.

The BOTDA technique also makes it possible to measure the distribution of the physical magnitudes along the optical fibre. To this end, the pump wave is pulsed before introducing it through one end of the fibre. This pulse is then counter-propagated along the fibre with a continuous probe wave that is introduced through the other end.

Finally, the gain experienced by this wave after traversing the optical fibre is measured as a function of time. The gain measured at a given instant corresponds to the interaction between the pump pulse and the probe wave in a given position of the fibre. Thus, using a classical reflectometric technique, gain in terms of time can be translated into gain in terms of position. This, combined with a sweep of the optical frequency separation between pump wave and probe wave, makes it possible to measure the Brillouin gain spectrum in each position of the fibre and, on the basis thereof, find the BFS in that position and, therefore, $T$ and $\varepsilon$. The spatial resolution of the measurement is determined by the duration of the pump pulse, since this determines the extent to which gain is produced by Brillouin interaction between the pump and probe waves. The BOTDA technique can also be implemented by measuring the Brillouin attenuation spectrum instead of the gain spectrum.

However, current BOTDA systems have significant limitations that prevent leveraging the full potential of this technology. The main ones are: the low signal-to-noise ratio (SNR) of the measurements, the high measurement times required, the nonlocal effects that limit measurement accuracy, and the maximum spatial resolution that can be obtained. The present invention contributes to directly or indirectly offsetting these limitations, allowing a very significant improvement in the performance of BOTDA-type distributed sensors.

One of the main limitations arises from the nonlocal effects, which restrict the maximum usable power of the probe wave and, therefore, also the signal-to-noise ratio (SNR) of the measurement. This effect is due to the transfer of power between the pump and probe waves: as the pump is propagated along the fibre, it transfers energy to the probe wave and therefore undergoes attenuation or depletion. This attenuation is dependent on wavelength, which introduces an additional transfer function to the Brillouin spectra measured. This introduces a systematic error in the measurements made which implies a decrease in sensor accuracy. They are called nonlocal effects because, due to this effect, the measurements made at a point of the optical fibre become dependent upon the conditions at other points of the fibre where the pump has been depleted. Various methods have been proposed to counter this limitation by using special BOTDA sensor configurations, such as using a double pump wave.

Another factor that limits the power of the probe wave that can be injected into the measurement fibre is the depletion and noise that is added to this wave due to spontaneous Brillouin scattering (SpBS). In fact, as the probe optical signal increases in power it begins to act as a pump optical signal of the SBS amplification of Stokes waves generated by SpBS from the thermal excitation of acoustic waves in the fibre. This gives rise to a depletion of the power of the probe wave and also noise due to the thermal origin and, therefore, random, of the amplified Stokes signals. This noise contributes to increasing the Relative Intensity Noise (RIN) of the detected signal, degrading the SNR of the measurement. This is a manifestation of the so-called Brillouin threshold of a section of fibre that determines the maximum power that can be injected into a fibre without causing significant depletion of the output power and the addition of noise thereto.

The measurement SNR is also affected by the attenuation of the pump pulses as they propagate over long lenghts of optical fibre. Therefore, at the outermost end of the fibre pulses arrive with low optical power, which implies that they give rise to very little Brillouin interaction in the probe wave. Thus, the received probe wave corresponding to this remote area of the fibre has little power, whereupon the SNR is also reduced. To offset this effect, the use of distributed Raman amplification that offsets the attenuation suffered by the pump wave on its journey along the fibre has been proposed. However, Raman amplification not only affects the pump wave but also the probe wave. This amplification increases the noise in the received probe wave due to the transfer of the relative intensity noise of the Raman pump laser to the probe wave.

An example of a BOTDA-type sensor is described in patent application WO 2012/10101592. In the devices disclosed by said document, the modulation of the wavelength of the pump signal is used to measure rapid variations of BFS. Its operation is based on using, in each position of the fibre, a separation between the pump and probe optical signal such as to position the wavelength of the probe optical signal on the slope of the Brillouin gain spectrum. Thus, the Brillouin spectrum is used as a discriminator to convert rapid changes in BFS, due for example to vibrations that give rise to rapid variations in deformation, into changes in amplitude of the detected signal. However, the stationary BFS, around which rapid variations of BFS occur, changes, generally, along the fibre due to the stationary characteristics of the deformation and temperature to which it is subjected at each point. In patent WO 2012/10101592 a probe optical signal is used whose wavelength is modulated in order to adapt to the stationary BFS variation along the fibre. This ensures that in each fibre segment the frequency separation between pump and probe is adequate to ensure that the probe optical signal is located on the slope of the gain spectrum.

Patent application EP 1959247 A2 discloses a Brillouin-based sensor wherein the direct modulation of the wavelength of an optical source is used in order to generate, in a single source, two optical wavelength signals separated by the BFS that can be used as pump and probe waves. To this end, a modulation with a square wave is used so that the laser chirp effect (i.e. the modulation in the optical emission frequency of a laser that appears when its current is modulated) gives rise to alternating pump and probe optical signals by time division.

Patent application EP 2708856 A1a, the name of the present applicant, discloses BOTDA-type measuring sensors wherein it is possible to increase the SNR received without increasing the measurement times or decreasing the accuracy of said devices. However, said sensor remains vulnerable to the limitation on the power of the probe optical signal injected imposed by the nonlocal effects and to the noise added to this probe optical signal due to spontaneous Brillouin scattering. The application of the present invention to the sensor described in application EP 2708856 A1 of the present invention would make it possible to reduce these limitations. Additionally, it would be possible to amplify the power of the pump pulses as they are propagated along the fibre.

Besides the BOTDA sensors, there are other types of Brillouin distributed sensors, such as those based on Brillouin optical coherence domain analysis (BOCDA), which use the SBS effect, but employing a method other than BOTDA to provide distributed BFS measurements. In BOCDA sensors, such as that disclosed in patent application EP 2068126 A1, pump and probe signals which are continuous over time are modulated in wavelength. Modulation makes it possible to modify their relative coherence so that, on counter-propagating themselves in the optical fibre sensor, the SBS interaction is located in a specific position wherein the correlation of two optical signals is high.

Further, international patent application WO 2014/012411 A1 discloses a sensor which uses an electro-optic modulator to modulate in amplitude the laser signal to generate two modulation sidebands, which are shifted in optical frequency from the optical frequency of the laser by the modulating frequency applied to the electro-optic modulator.

## DESCRIPTION OF THE INVENTION

In order to address the aforementioned problems and drawbacks of the prior art, a first aspect of the invention includes a sensor for measuring the distribution of physical magnitudes in an optical fibre comprising, at least:

- an optical signal generator configured to generate a first optical signal(s) and a second optical signal(s) that gives/give rise, respectively, to at least one pump optical signal and, at least, one probe optical signal;
- an optical fibre segment wherein the probe optical signal(s) interacts/interact with the pump optical signal(s);
- a pulsing device configured to pulse the first optical signal(s) to form the pulsed pump optical signal(s);
- a probe wave generator configured to generate probe optical signal(s) from the second optical signal(s);
- a photoreceiver configured to detect the optical output signal resulting from the interaction between the pump signal(s) and probe optical signal(s);
- an optical output signal processing unit configured to obtain the characteristics of the interaction of the probe optical signal(s) with the pulsed pump optical signal(s) along the optical fibre;

characterised in that it further comprises:

- a unit for reducing nonlocal effects and increasing the Brillouin threshold comprising, in turn, a modulation signal generator that allows to modulate wavelength in at least one of the probe optical signal(s) and/or at least one amplification optical signal generated by at least one additional optical source, to offset the attenuation of the pump optical signal along the optical fibre.

The measuring sensor of the present invention allows to offset the reduction in power of the probe optical signal imposed by the nonlocal effects and noise added to said probe optical signal by spontaneous Brillouin scattering (the aforementioned drawbacks of the prior art), through a first novel approach: the modulation of the wavelength of the probe optical signal (or optical signals), optionally synchronised with the pulsing of the pump optical signal (or optical signals), a technique not used for this purpose to date.

Alternatively, through a second novel approach, a second embodiment of the measuring sensor according to the invention makes it possible to offset the attenuation of the pump optical signal along the optical fibre. To this end, it comprises an optical source configured to generate a Brillouin amplification pump optical signal, also called "amplification optical signal". In addition, said amplification optical signal is optionally modulated in wavelength by a modulation signal generator. Likewise, in a preferred embodiment of the invention the amplification optical signal is optionally synchronised with the pulsing of the pump optical signal(s), so that even greater stability in the power of the pump optical signal is achieved. Lastly, in another alternative embodiment of the invention, neither the amplification optical signal nor the probe optical signal(s) are modulated in wavelength.

Furthermore, it should be noted that, along the fibre, the wavelength separation between the probe optical signal (or optical signals) and the pump optical signal has a constant component that does not include modulating the wavelength of the probe optical signal (or optical signals), and a variable component, which is the result of said modulation.

In a preferred embodiment of the invention, the modulation signal generator is synchronised with the pulse generator, so that the modulation wavelength of at least one probe optical signal is synchronised with the pulsation of the pump optical signal(s).

In another preferred embodiment of the invention, the modulation signal generator is an electrical signal generator which injects an electrical signal into the optical signal generator unit and which is synchronised, in turn, with the pulse generator so that the pulsed pump optical signals coincide in time with the same modulation waveform.

In another preferred embodiment, the optical signal generator further comprises an optical phase modulator.

The interaction Brillouin spectra generated can be used for the BOTDA measurement, in which case the variation of characteristics is performed by modulating the wavelength of the probe signal. They can also be interaction Brillouin spectra additional to those used in the BOTDA measurement, for example, Brillouin gain spectra used to amplify the pump pulse used in the BOTDA as they propagate down the fibre, offsetting the attenuation introduced by it. In both cases sensor performance is enhanced in terms of signal-to-noise ratio and other related characteristics (measurement time, resolution, range, etc.).

The wavelength of said amplification optical signal may optionally be modulated, preferably, by modulating the electrical current injected into the optical source that generates it and, even more preferably, so that the wavelength of said amplification optical signal is synchronised with the pulsed pump signal. Additionally, the optical source may optionally comprise a plurality of laser sources. The present invention also envisages that, optionally, the amplification optical signal is not modulated in wavelength.

A second aspect of the invention relates to a method for measuring the distribution of physical magnitudes in an optical fibre that uses a sensor according to the first aspect of the invention and comprises the following stages:

i. modulating the wavelength of the probe optical signal (to create a variation profile along the optical fibre intended to reduce nonlocal effects and increase the Brillouin threshold of said optical fibre);

ii. Synchronising the pulsation of the pump optical signal with the modulation of the wavelength of the probe optical signal;

iii. Adjusting the constant component of the wavelength separation of the optical probe and pump signals;

iv. Introducing the pulsed pump optical signal through one end of an optical fibre segment;

v. Introducing the probe optical signal through the other end of the optical fibre;

vi. Enabling the interaction in the optical fibre, through the stimulated Brillouin scattering effect, of the pump optical signal with the probe optical signal, which gives rise to an output optical signal;

vii. Detecting the optical output signal in the photoreceiver; and

viii. Analysing and processing the optical output signal detected in the photoreceiver by means of the processing unit to obtain the distribution, along the optical fibre, of the module and/or the phase spectrum of the Brillouin interaction.

In a preferred embodiment of the invention, the measuring method further comprises repeating stages (i) to (viii) described above for different settings of the constant component of the wavelength separation of the optical probe and pump signals, in order to obtain the distribution along the optical fibre of the module and/or the phase of the Brillouin interaction at different optical frequencies.

In another preferred embodiment of the invention, the method comprises:

- stages (i) to (v) described above;
- introducing, through the same end of the optical fiber wherethrough the probe optical signal has been introduced, an amplification optical signal to act as Brillouin pump gain for the pulsed pump optical signal;
- the previously described stage (vi);
- allowing interaction of the pump optical signal with the amplification optical signal in the optical fibre; and
- stages (vii) and (viii) described above.

In another even more preferred embodiment of the invention, the amplification optical signal is modulated in wavelength prior to being introduced into the optical fibre.

In a final embodiment of the invention, the method comprises:

- stages (iii) to (v) described above;
- introducing, through the same end of the optical fibre wherein the probe optical signal (I) has been introduced, an amplification optical signal (J) to act as Brillouin pump gain for the pulsed pump optical signal (H);
- stage (vi) described above;
- enabling the interaction of the pulsed pump optical signal (H) with the amplification optical signal (I) in the optical fibre (7); and

- stages (vii) and (viii) described above.

## DESCRIPTION OF THE DRAWINGS

What follows is a description of additional characteristics of the invention in relation to the accompanying figures, provided solely by way of explanatory and non-limiting example, wherein:

Figure 1 shows a conventional BOTDA sensor according to the prior art;

Figures 2a and 2b show the distribution of the Brillouin spectra measured by the sensor of Figure 1 along an optical fibre that is subjected to constant deformation and temperature throughout its length;

Figure 3 shows a schematic view of an embodiment of a sensor according to an aspect of the invention;

Figures 4a and 4b describe the distribution of the Brillouin spectra measured along an optical fibre subjected to deformation and constant temperature throughout its length when a sinusoidal BFS has been synthesised in a sensor according to an aspect of the invention;

Figures 5a and 5b describe the reduction achieved in nonlocal effects by synthesising various BFS profiles, in a sensor according to an aspect of the invention;

Figure 6 shows a schematic view of another embodiment of a sensor according to an aspect of the invention wherein an additional optical source is used to pump Brillouin gain which amplifies the pump pulses;

Figures 7a to 7c describe the spectrum of optical signals used in a sensor according to an aspect of the invention and the Brillouin gain distribution generated in the fibre for the pump pulses;

Figure 8 shows a schematic view of a sensor according to an aspect of the invention wherein an additional optical source is used to pump Brillouin gain which amplifies the pump pulses;

Figure 9 shows a schematic view of a sensor which implements an aspect of the invention wherein multiple additional optical sources are used to pump Brillouin gain which amplifies the pump pulses;

Figure 10 shows a schematic view of a preferred embodiment of a sensor according to the present invention;

Figure 11 shows a schematic diagram of the optical signal generator unit used in an embodiment of the present invention;

Figure 12 shows an embodiment of the optical signal generator of the present invention;

Figure 13 shows another embodiment of the optical signal generator of the device of the invention;

Figure 14 shows an embodiment of the probe wave generator of the invention;

Figure 15 shows an embodiment of the pump pulse shaper of the invention; and

Figure 16 shows another embodiment of the pump pulse generator of the invention.

## DETAILED DESCRIPTION OF THE INVENTION

What follows is a description of various specific examples of the invention relating to the accompanying figures. In said figures, components with identical or similar functions have been designated using the same reference number.

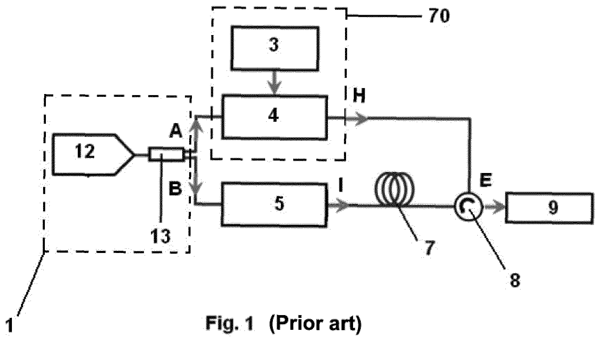

Figure 1 describes a BOTDA sensor according to the prior art, comprising a single optical signal generator 1 which, in this embodiment, comprises a laser 12 and a coupler 13. The optical signals generated by said optical signal generator are divided into a first optical signal A and a second optical signal B, thanks to the coupler 13. The first optical signal A enters a pulsing device 70 comprising a pulse generator 3 and a pulse shaper 4 (explained in detail later in the text), to give rise to a pulsed pump optical signal H, while the second optical signal B gives rise to an probe optical signal I, which in this case is a continuous signal, by means of a probe wave generator 5 (described later in detail). The pulsed pump H and probe I optical signals interact with one another in an optical fibre 7, giving rise to an optical output signal E which is detected by a photoreceiver 9. The sensor is also provided with a circulator 8 (explained later in detail).

Pulsed pump H and probe I optical signals also have different wavelengths, the difference of these wavelengths being close to the BFS of the optical fibre 7 used.

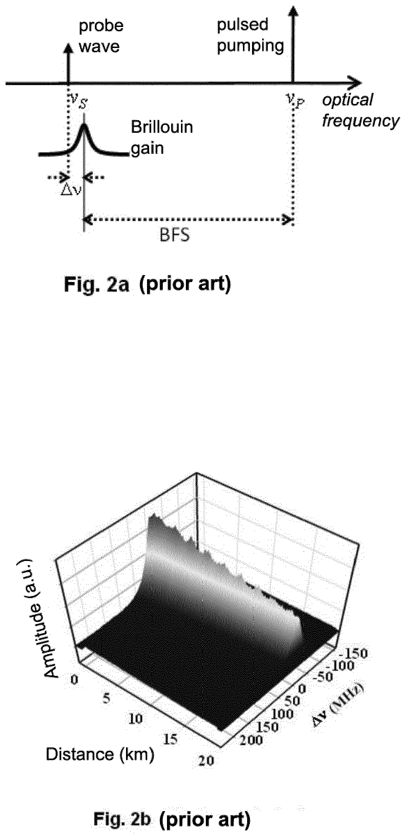

Figures 2a and 2b show a typical example of the distribution of the Brillouin spectra that would be measured using a conventional BOTDA sensor, as shown in Fig.1, along an optical fibre having a practically constant BFS throughout its length, i.e. the whole fibre was at the same temperature and suffered a similar deformation. These spectra are obtained by varying the wavelength separation between the pump and probe wave. In this figure it can be observed that the Brillouin spectra are centred around the same frequency for all the positions.

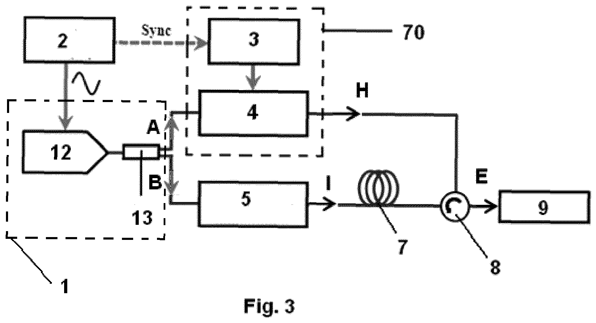

Figure 3 shows an embodiment of a sensor for measuring the distribution of physical magnitudes in an optical fibre according to the present invention comprising, in addition to the elements described above relative to Figure 1, a modulation signal generator 2 in the form of an electrical signal generator that injects electrical signals into the optical signal generator 1 designed to cause a modulation in wavelength. Said electrical signal generator 2 is also synchronised with the pulsing device 70 (formed by the pulse generator 3 and the pulse shaper 4).

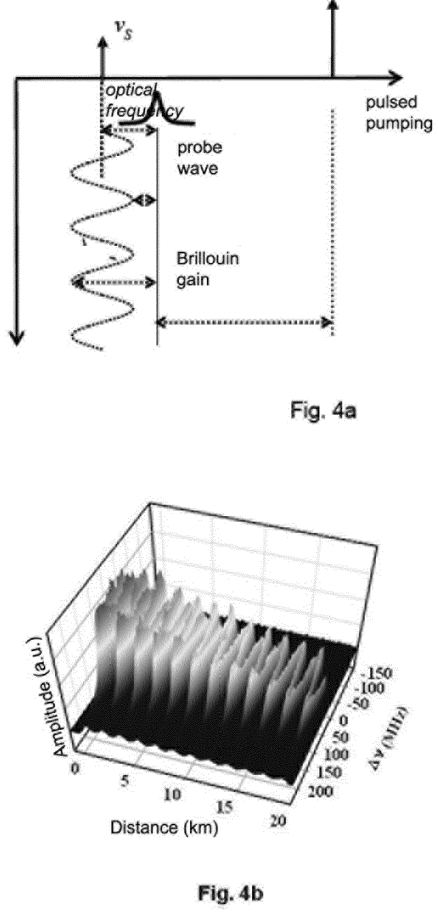

Thus, in this embodiment of the BOTDA sensor according to the invention, the laser emission wavelength 12 is modulated by means of an electrical signal, typically low frequency, which is synchronised with the pulsing device 70 so that the successive pulsed pump optical signals H coincide in time with the same waveform modulation. This modulation can be performed, for example, by means of a small modulation of a current injected into a semiconductor laser, since the so-called laser chirp effect transforms current modulation into wavelength modulation. Figures 4a and 4b show, by way of example, a modulation by means of a sine wave, but any other waveform is possible. As explained below, the wavelength modulation waveform achieved is transferred directly to the shape of the virtual BFS variation generated in the optical fibre sensor.

In the upper branch of the diagram of Figure 3, the pulsed pump optical signal H, which this time is also modulated in wavelength, is pulsed. As the pulsing device 70 and modulation device are synchronised, the pulsed pump optical signal H acquires a wavelength that depends on the fixed propagation delay between the laser 12 and the pulsing device 70. This pulsed pump optical signal H is propagated in the opposite direction to the probe optical signal I in the optical fibre. However, in contrast to the conventional BOTDA, the wavelength of the probe optical signal I with which it interacts is not constant along the optical fibre because the laser 12 is modulated in wavelength. Therefore, at each position (z) of the optical fibre, the pulsed pump optical signal H interacts with a probe optical signal I with a different wavelength. The Brillouin interaction between these two optical signals is determined by the separation of their difference in optical frequency (wavelength) with respect to the centre of the Brillouin spectrum $\Delta v$, which is given at each position z along the optical fibre by:

$$\Delta v(z) = v_S(z) - v_P - BFS(z) \qquad (1)$$

where $v_P$ is the optical frequency of the pulsed pump optical signal H, which remains constant for all positions of the optical fibre, and vs is the local optical frequency of the probe wave, which varies depending on the position. This mathematical expression implies that, from the standpoint of the Brillouin interaction, having a variation in BFS(z) along the fibre is equivalent to having an identical variation in vs(z). Therefore, it can be said that, by modulating the wavelength of the probe optical signal I envisaged in the devices of the invention, a virtual BFS profile is being synthesised along the optical fibre 7. It is called virtual BFS because modulating the probe wave has an effect on the measurement of the Brillouin spectra similar to the effect it would have if the BFS actually varied along the fibre.

Figures 4a and 4b show the spectral distribution that would be measured with the BOTDA sensor according to the invention in the case where a sinusoidal modulation is applied to the laser 12 and considering the same optical fibre 7 as in figures 2a and 2b. These spectra are measured upon modifying the constant component of the wavelength separation between the pump H and probe I optical signals. In this case, the effect of BFS synthesis with a sinusoidal shape can be clearly observed.

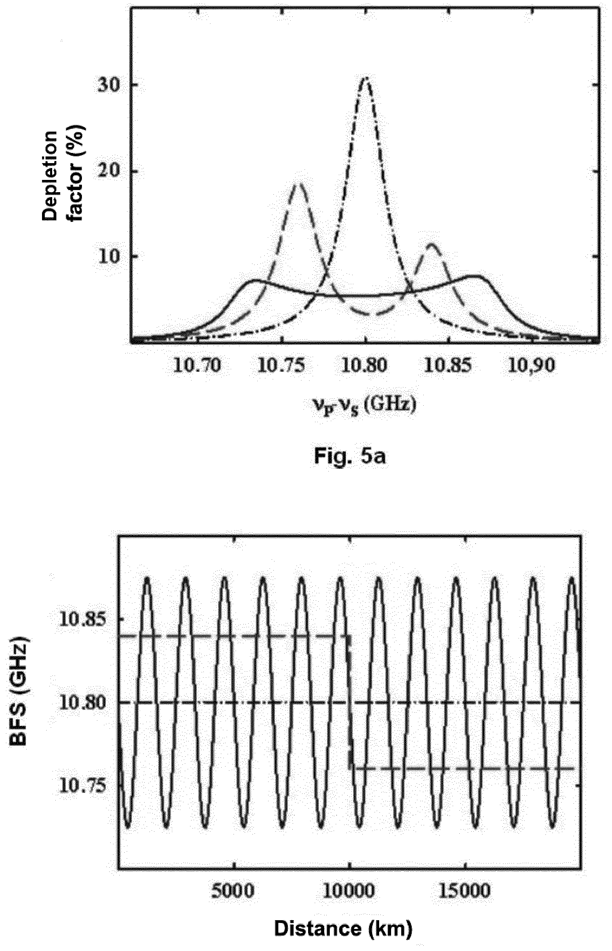

The synthesis of virtual BFS characteristic of the sensors according to the invention can be used, for example, to offset the nonlocal effects. The worst case scenario with these effects for a conventional BOTDA is when we have a fibre with a uniform BFS. In this case, there is energy transfer between the pump optical signal and the probe optical signal along the entire fibre, energy transfer is maximal and the measurement error at the end of the fibre is large. Using a sensor according to the invention can offset this effect because, even if the BFS along the optical fibre 7 is constant, the modulation of the wavelength of the probe optical signal I effectively generates a variable virtual BFS. As a consequence of the dependence with the position of the virtual BFS, energy transfer between the pump H and probe I optical signal is reduced and, thus, the nonlocal effects. Figures 5a and 5b show examples of offset of nonlocal effects using the BFS synthesis characteristic of the sensors of the present invention. Nonlocal effects can be characterised by the so-called depletion factor that quantifies the depletion of the pulsed optical signal H pump due to their interaction with the probe optical signal I, which is defined as:

$$d = \left|P_P - P_{P0}\right| / P_{P0} \qquad (2)$$

Where $P_P$ and $P_{P0}$ are the powers of the pulsed pump H optical signal at the end of the optical fibre 7 with and without Brillouin interaction, respectively.

Figure 5a shows the depletion factor calculated for the different synthesised BFS profiles and for uniform BFS profiles that are represented in Figure 5b. The dash-dot line shows the case of an optical fibre 7 having a uniform BFS distribution (10.8 GHz in this example). For this optical fibre 7, the pump power acquires a dependence on Lorentzian wavelength that matches the maximum BFS. It is well known that, in order to achieve a precision of at least 1 MHz in the BFS measurement, the maximum depletion factor must be 17% (see, for example, Thevenaz L. et. al., Optics Expulse, Vol. 21, pp.

14017-14035, 2013). This value would clearly be exceeded in this case, thereby increasing the measurement error.

The depletion of the pulsed pump H optical signal can be reduced by synthesising a virtual BFS profile. For example, using a square wave makes it possible to simulate a sensing fibre composed of two segments with different BFS, as shown by the dashed line of Figure 5b. With this BFS profile the clearing factor composed of two peaks shown in Figure 5a would be obtained. It can be observed that the maximum pulse depletion is reduced. Another possibility is to synthesise a BFS profile that varies continuously along the optical fibre 7. For example, a sinusoidal modulation that distributes the energy in a higher frequency range than the square modulation. Figure 5b shows, with a solid line, an example of modulation with a sine wave that generates a sinusoidal variation of BFS. This modulation gives rise to an almost flat depletion factor, as shown in Figure 5a. It can be observed that a depletion factor of less than 10% is achieved in this case, which ensures a good performance of the BOTDA sensor.

These are examples of some usable BFS variation profiles. However, optimised virtual BFS variation profiles can be found to achieve the objective of minimising nonlocal effects. In this manner, the power of the probe I optical signal can be increased, thereby enhancing the SNR of the detected signal and the other related sensor characteristics (measurement time, resolution, range, etc.).

Another advantage that can be achieved by synthesising the virtual BFS characteristic of the sensors is to reduce the limitation on the maximum power of the probe I optical signal caused by the harmful effects of the SBS pumped by the probe optical signal itself. That is, it is possible to increase the Brillouin threshold by synthesising a virtual BFS by modulating the probe optical signal. The Brillouin threshold worst case scenario is when we have a fibre with a constant BFS; therefore the synthesis of a virtual BFS helps to reduce and relax the limitation on the maximum power of the probe optical signal usable in a BOTDA. Here, the same principle of the techniques used to achieve an increase in the Brillouin threshold by concatenating fibre segments with different BFS is followed (See, for example, K. Shiraki, et al., "SBS threshold of a fibre with a Brillouin frequency shift distribution," J. Lightw. Technol. 14(1), 50-57 (1996)). For example, it is found that in a 20 km single-mode fibre, the Brillouin threshold increases from ~7 mW to -44 mW when a BFS sinusoidal profile is synthesised with a frequency deviation of 150 MHz and a total of 12 periods contained along the fibre.

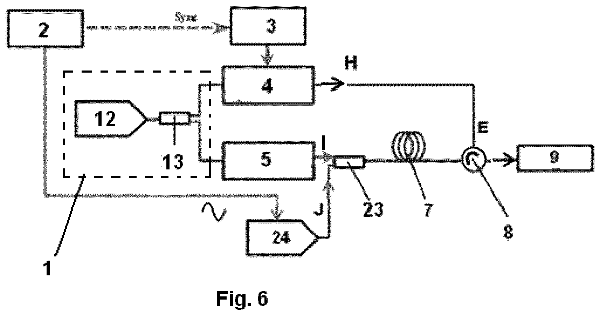

Figure 6 shows another embodiment of a sensor for measuring the distribution of physical magnitudes in an optical fibre according to the present invention, which comprises, in addition to the elements described above in relation to Figure 3, an optical source 24 configured to generate an amplification J optical signal, intended to offset the attenuation of a pulsed pump H optical signal along the optical fibre 7. To this end, said pulsed pump H optical signal and said probe I optical signal pass through a second coupler 23.

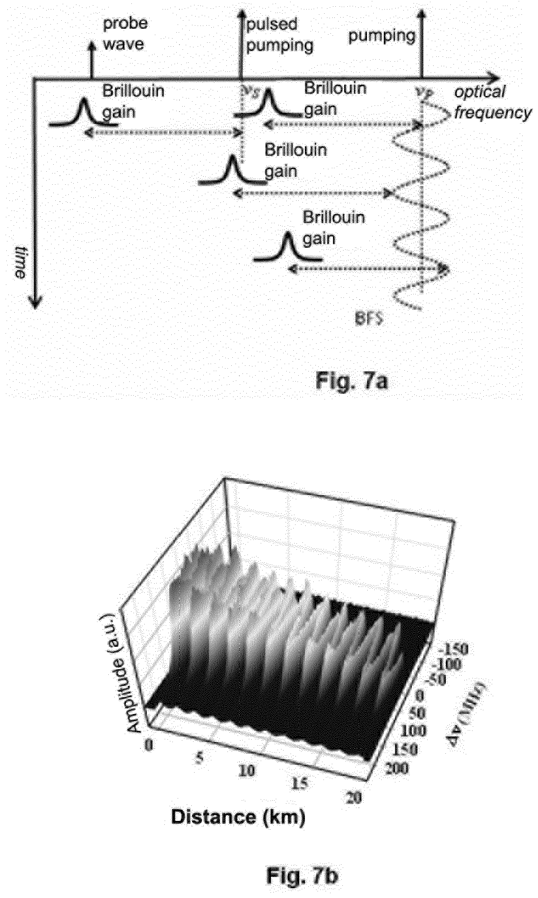

Figure 6 therefore describes another aspect of the present invention, in this case the use of the generation of Brillouin interaction spectra along the optical fibre 7 to offset the attenuation experienced by the pump H optical signals on being propagated through the optical fibre sensor 7. With respect to the sensor of Figure 3, besides the optical signal generator 1, in this embodiment an optical source 24 that generates an optical signal J is added which is used to pump the Brillouin amplification of the pulsed pump H optical signals. Therefore, in this embodiment of the sensor according to the invention there are two different Brillouin interactions: that used to measure the BOTDA measurement and that used to amplify the pump pulses used in the BOTDA. The spectra of the different optical signals involved are shown schematically in Figures 7a and 7b.

In the aspect of the invention described in Figure 6, the emission wavelength of the optical source 24 used is modulated by means of a signal which is synchronised with the pulsing device 70, so that successive pulsed pump H optical signals coincide in time with the same waveform of the modulation. Again, this modulation can be carried out, for example, by modulating the current injected into a semiconductor laser. The figure shows, for example, a modulation with a sine wave, but any other waveform can be used. In this case a Brillouin interaction is generated with a virtual BFS profile that amplifies the pump pulses. The Brillouin interaction between the optical signal generated by the laser and the pulses is determined by the separation of their difference in optical frequency (wavelength) with respect to the centre of the Brillouin spectrum, $\Delta v_2$, which is given by:

$$\Delta v_2(z) = v_P - v_L(z) - BFS(z) \qquad (2)$$

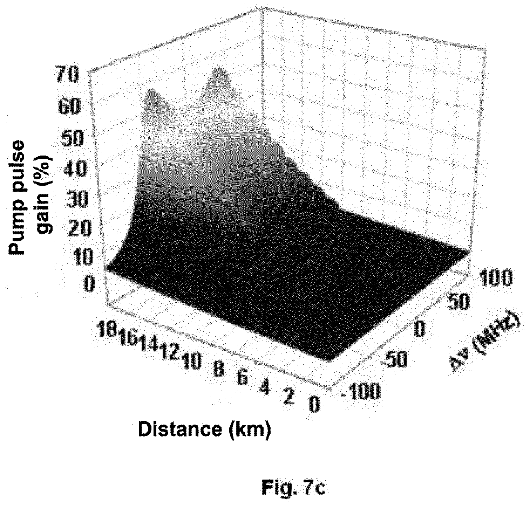

where $v_L$ is the wavelength of the ancillary laser in each position of the fibre. In this case the pulsed pump H optical signal acts as a Stokes wave in the Brillouin amplification and the signal of the optical source 24 acts as a pump wave. Figures 7a and 7b also show an example of the gain spectrum experienced by the pulsed pump H optical signal in accordance with the position which, as can be observed, has a shape analogous to that of Figure 4. Also shown, in Figure 7c, is the total gain spectrum experienced by the pulsed pump H optical signal since entering the fibre up to each of the positions z. It can be observed that the gain spectrum is almost flat and that it increases as it is propagated through the fibre.

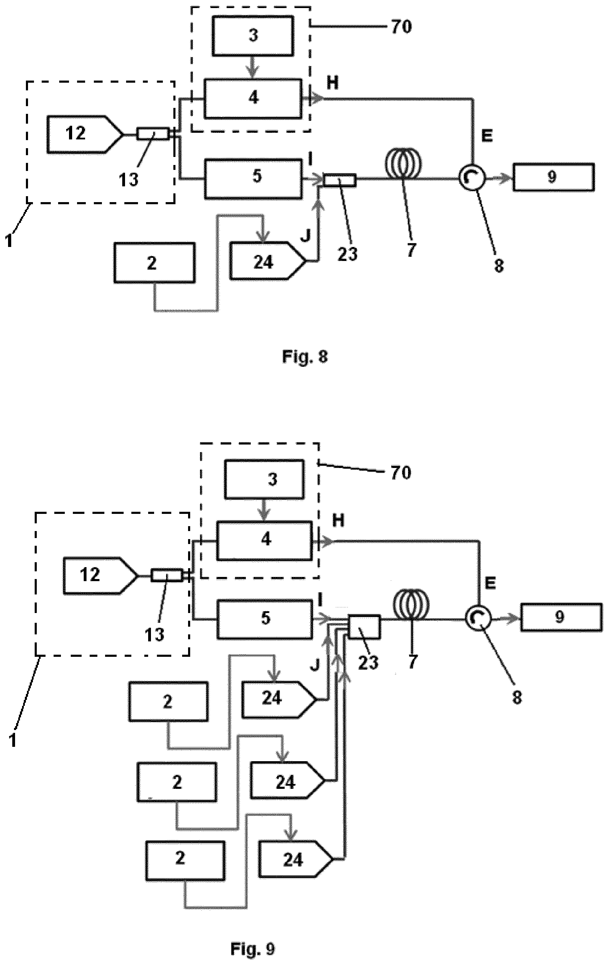

Figure 8 describes another aspect of the invention analogous to that described in Figure 6, but wherein the signal generated by the electrical signal generator 60 need not be periodic or synchronised with the pulsed pump H optical signals. Additionally, in this case, a combination of modulation of amplitude and wavelength could be used. In this case, Brillouin interaction spectra whose characteristics vary dynamically over time would be created at each point of the fibre.

Figure 9 shows another aspect of the invention analogous to that described in figures 6 and 7, but in which it is considered that multiple pump optical sources 24 may or may not be modulated and optionally synchronised with the pulsed pump H optical signals.

In summary, the present invention introduces novelties in the method of generating the optical signals used in Brillouin distributed sensors in order to generate Brillouin interaction profiles that may vary along the fibre. This variation of interaction profiles can be achieved by modulating the probe wave in order to achieve a Brillouin interaction distribution along the fibre that minimises the nonlocal effects and the noise generated by spontaneous Brillouin scattering. Another possibility is to generate Brillouin gain profiles that may vary along the fibre in order to amplify pump pulses. To this end, at least one additional optical source is used which acts as pump of this gain and whose wavelength emission may be modulated.

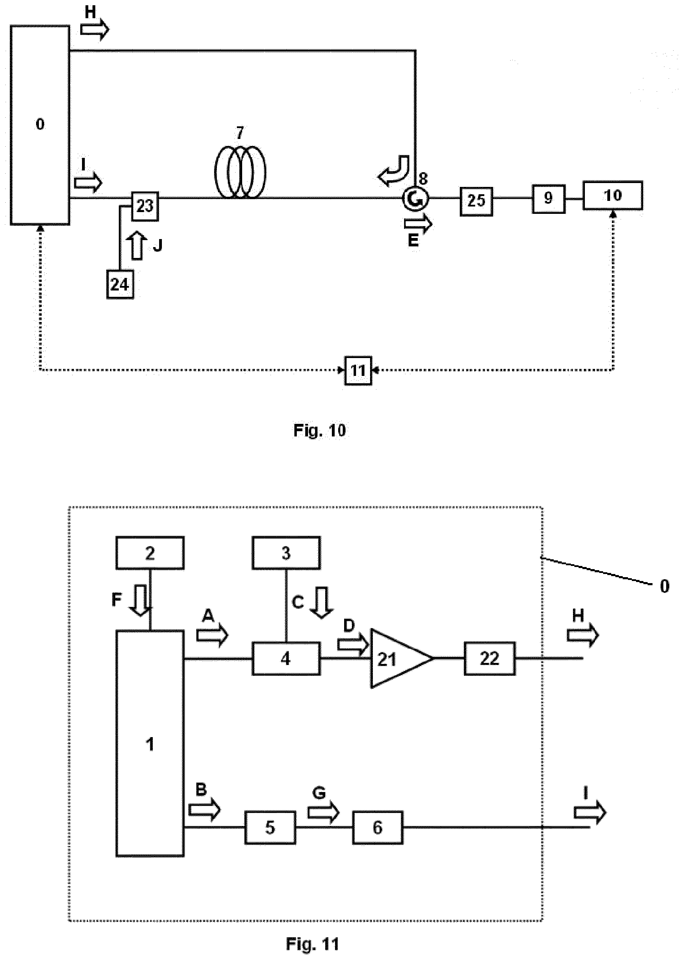

Figure 10 shows an embodiment of the device of the invention comprising an optical signal generator 0 that encompasses the portion of the measuring sensor according to the invention responsible for generating the pulsed pump H and probe I optical signals, in addition to the modulation and pulsing of said H and I optical signals, a section of sensing optical fibre 7, a circulator 8, an optical filter 25, a photoreceiver 9, a signal processing and data capture system 10, a control system 11, a coupler or multiplexer 23 and an additional optical source 24.

With regard to the optical signal generator 0 and the signals generated by it, the following considerations must be taken into consideration:

- The optical signal generator 0 is responsible for generating optical signals H and I which interact in the optical fibre 7.
- The H signal is an optical signal composed of light pulses which acts as a pump of the Brillouin interaction in the optical fibre 7.
- The I signal is an optical signal which acts as the probe wave of the Brillouin interaction that occurs in the optical fibre 7.
- At least in the case of the I signal, its wavelength can be modulated over time by means of a modulating signal which is synchronised with the light pulses of the H signal.

Regarding the optical fibre 7, the following considerations must be taken into account:

- The optical fibre 7 is where the Brillouin interaction takes place between the pump H optical signal and the probe I optical signal.
- The optical fibre 7 is, preferably, of the single-mode type (i.e. in which only one mode of light is propagated), to guarantee the efficiency of the Brillouin interaction therein.

- The optical fibre 7 preferably has characteristics inherent to the Brillouin spectrum, particularly to the BFS, at each point thereof, which depends on the physical magnitudes to which they are subjected.
- The optical fibre 7 preferably has characteristics inherent to the interaction, which include the dependency ratios of the BFS with temperature and elongation.
- The optical fibre 7 preferably has dependency coefficients of the BFS with temperature and elongation which are, preferably, known a priori, in order to use the fibre as a sensing element of these physical magnitudes.

With regard to the circulator 8, its mission is, on the one hand, to route the pump H optical signal to the optical fibre 7 under analysis and, on the other, to route the signal E from the optical fibre 7 to the photoreceiver 9.

With regard to the optical filter 25, its mission is to filter, if necessary, the optical noise or other unwanted components of the optical spectrum, preferably before the photoreceiver 9.

With regard to the photoreceiver 9, said element is responsible for detecting the output optical signal E resulting from the propagation of the I signal along the optical fibre 7, where it experiences Brillouin interaction with the pump H signal.

With regard to the signal processing and data capture system 10, said element is responsible for processing the signal detected in the photoreceiver 9, obtaining the measurement data and acting as an interface with the control system 11.

With regard to the control system 11, it is responsible for synchronising the operation of the measurement system acting, at least, on the optical signal generator 0 through a combination of programmable hardware and/or software, in addition to processing the measurement data captured in the data capture system 10 to obtain the measurement of the BFS and, where appropriate, of the physical magnitudes at each point of the optical fibre 7.

With regard to the optical source 24 and the signal generated by it J, the following considerations must be taken into account:

- The mission of the optical source 24 is to generate a signal J which is used as a pump of the Brillouin gain in the optical fibre 7 to amplify the pump pulses H.

In one embodiment of the present invention, the optical source 24 has a modulated emission wavelength.

In another embodiment of the present invention, the optical source 24 has an emission wavelength modulated by means of a modulating signal which is synchronised with the light pulses of the signal H.

In another embodiment of the present invention, the optical source 24 is composed of multiple optical sources whose emission wavelength may or may not be modulated, and may be synchronised or not with the light pulses of the signal H.

With regard to the coupler or multiplexer 23, its mission is to combine the I and J signals from the optical signal generator 0 and the optical source 24, respectively, in the optical fibre 7.

In another preferred embodiment of the invention, the optical source 24 or the coupler or multiplexer 23 are not necessary since we do not seek to amplify the pump pulses H.

In another preferred embodiment of the invention the wavelength of the signal I emitted by the optical signal 0 generator is not modulated.

Figure 11 shows a preferred embodiment of the optical signal generator unit 0, which comprises an optical signal generator 1, a modulation signal generator 2, a pulse generator 3, a pump pulse shaper 4, an optical amplifier 21, an optical filter 22, a probe wave generator 5 and a polarisation controller 6.

With regard to the optical signal generator unit 1 and the optical signals generated by it, the following considerations must be taken into account:

- The optical signal generator 1 generates at least two separate optical signals, a first optical signal(s) A is/are used to generate the pump optical signal(s) and a second optical signal(s) B to generate the probe optical signal(s).

- For, at least, one of the generated optical signals B, its wavelength can be modulated by the modulating signal generated by the modulation signal generator 2.

With regard to the modulating signal generator 2 and the electrical signal F generated by it, the following considerations must be taken into account:

- The modulation signal generator 2 is responsible for generating an electrical signal F which can modulate the wavelength of at least one of the signals generated by the optical source 1.
- The electrical signal F is, preferably, a periodic signal.
- The electrical signal F is synchronised with the pulsed signal C generated by the pulse generator 3.

With regard to the pulse generator 3 and the electrical signal C generated by it, the following considerations must be taken into account:

- The pulse generator 3 is responsible for generating an electrical signal C composed of electrical pulses that serve to form the pump optical pulses.

- The electrical signal C is composed of pulses which are, preferably, synchronised with the periodic signal F generated by the modulation signal generator 2.

With regard to the pump pulse shaper 4, said element is responsible for generating optical pulses pump from one of the optical signals A generated in the optical signal generator 1 using the electrical pulses C generated by the pulse generator 3.

With regard to the optical amplifier 21, its mission is to increase, if necessary, the power of the optical signal D generated by the pump pulse shaper 4 in order to increase the magnitude of the Brillouin interaction in the optical fibre 7.

With regard to the optical filter 22, its mission is to filter, if necessary, the optical noise or other unwanted components of the optical spectrum, preferably at the output of the optical amplifier 21.

With regard to the probe wave generator 5 and the optical signal G generated by it, the following considerations must be taken into account:

- The probe wave generator 5 is responsible for generating probe wave from one of the second signals B of the optical signal generator 1.

With regard to the polarisation controller 6, said element is responsible for modifying the polarisation of the wave G in order to ensure that efficient Brillouin interaction occurs at all points of the fibre during the measurement.

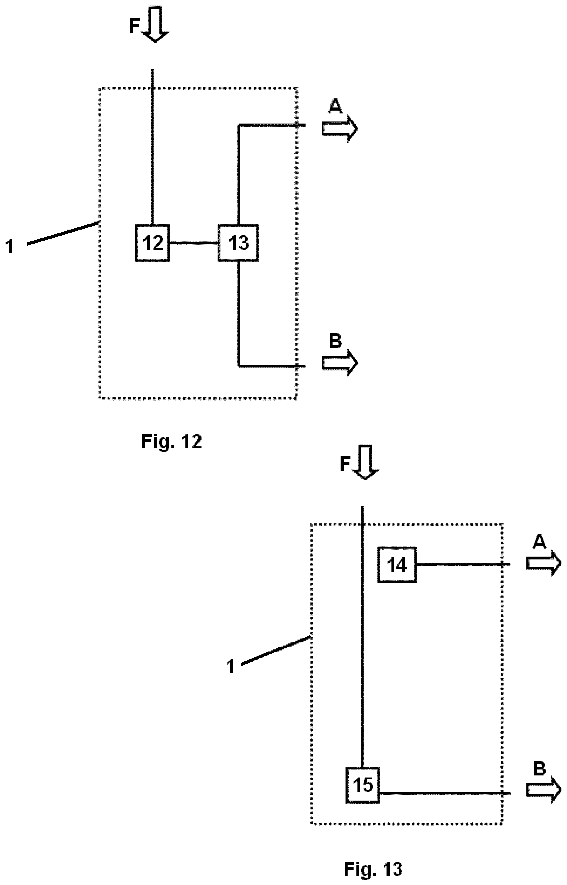

Figure 12 shows the optical signal generator 1 used in a preferred embodiment of the present invention preferably comprises a narrowband optical source 12, preferably a laser source and an optical signal splitter 13.

As regards the narrowband optical source 12 and the optical signal generated by it, the following considerations must be taken into account:

- The optical signal generated by the narrowband optical source 12, preferably, has a spectral width sufficiently narrow to ensure the efficiency of the SBS effect on the fibre.
- The electrical signal F generated by the modulation signal generator 2 is used to modulate the wavelength of the signal emitted by the narrowband optical source 12, preferably, by modulating the injection current to the laser source.

With regard to the splitter 13, it is responsible for splitting the narrowband optical signal source 12 into, at least, two paths.

Figure 13 shows the optical signal generator 1 used in another preferred embodiment of the present invention, which preferably comprises two sources.

With regard to the narrowband optical sources 14 and 15 and the optical signals generated by it, the following considerations must be taken into account:

- The optical signal generated by the narrowband optical sources 14 15 preferably has a spectral width sufficiently narrow to ensure the efficiency of the SBS effect on the fibre.
- The electrical signal F generated by the modulation signal generator 2 is used to modulate the wavelength of the signal emitted by, at least, one of the narrowband optical sources 15, preferably by modulating the current injected into the laser source.
- The narrowband optical sources 14 and 15 have a separation in wavelength having a stable and tunable emission.

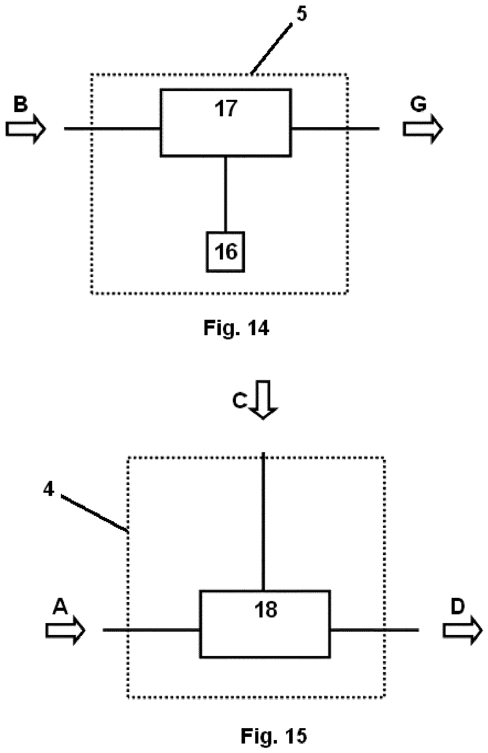

Figure 14 shows the probe wave generator 5 used in a preferred embodiment of the present invention, which preferably comprises a radio frequency signal generator 16 and an optical modulator 17.

With regard to the radio frequency signal generator 16, the following considerations must be taken into account:

- The radio frequency signal generator 16 is responsible for generating a radio frequency signal, preferably sinusoidal, that is applied to the optical modulator 17 to generate modulation sidebands in the spectrum of the optical signal G.
- The radio frequency signal generator 16 can vary the frequency of the electrical signal generated, in the event of opting for measuring the Brillouin spectrum by tuning the optical frequency of one of the spectral components of the probe signal G.
- The radio frequency signal generator 16 provides a fixed frequency electrical signal, in the event of opting for measuring the Brillouin spectrum by tuning the optical frequency of the pump wave or if a specific frequency within the Brillouin spectrum is going to be measured.

With regard to the optical modulator 17 and the optical signal G generated by it, the following considerations must be taken into account:

- The optical modulator 17 is responsible for modulating the optical signal B generated by the optical signal generator 1 to generate modulation sidebands in the spectrum of the optical signal G.
- The separation of the modulation sidebands with respect to the optical carrier is determined by the frequency of the radio frequency signal generated by the radio frequency signal generator 16.
- At least one of the modulation sidebands is used as a probe wave of the Brillouin interaction generated by the pump H signal in the optical fibre 7.

In another embodiment of the present invention, the use of a probe wave 5 generator is not necessary, due to which the optical signal G would be the optical signal B itself.

Figure 15 shows the pump pulse shaper 4 used in a preferred embodiment of the present invention, which preferably comprises an optical modulator 18.

With regard to the optical modulator 18, said element is responsible for generating an optical pulse from the C signal generated by the pulse generator 3.

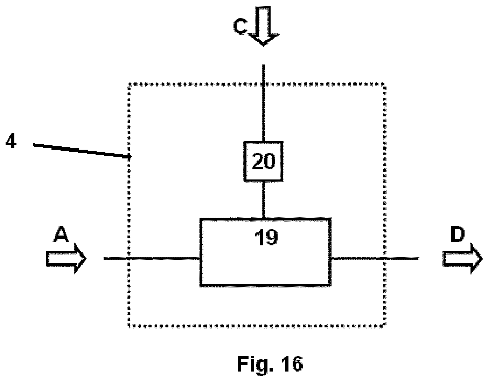

Figure 16 shows the pump pulse shaper 4 used in another preferred embodiment of the present invention, which preferably comprises an optical modulator 19 and a radio frequency pulse generator 20.

With regard to the radio frequency pulse generator 20 and the signal generated by it, the following considerations must be taken into account:

- The radio frequency pulse generator 20 is responsible for generating electrical signal pulses, preferably sinusoidal, and for a given frequency.
- The radio frequency pulse generator 20 allows variation, during the measurement, of the frequency of the pulsed sinusoidal signal that it generates, in the event of opting for performing the measurement of the Brillouin spectrum by varying the optical frequency of the pump H optical signal pump.
- The radio frequency pulse generator 20 maintains the frequency of the pulsed sinusoidal signal generated fixed, in the event of opting for measuring the Brillouin spectrum measured by tuning the optical frequency of one of the spectral components of the probe I wave, or for measuring a specific frequency within the Brillouin spectrum.

With regard to the optical modulator 19, the following considerations must be taken into account:

- The optical modulator is responsible for generating, at least, one modulation side band of the optical signal A generated by the optical signal generator 1.
- The signal applied to the optical modulator 19 is preferably generated in the radio frequency pulse generator 20.

The method of measuring the Brillouin interaction spectra in the optical fibre 7 using the present embodiment of the invention includes the following stages;

    i. The modulation of the wavelength of the signal I is adjusted, if necessary, in order to create a probe wave wavelength variation profile along the optical fibre 7 that reduces the nonlocal effects and the Brillouin noise. In the event of using the embodiment of the optical signal generator unit 0 based on the use of a modulation signal generator 2, the adjustment of the modulation of the signal I wavelength is carried out by adjusting the shape of the signal wave F generated by the modulation signal generator 2.

    ii. The pulses of the pump H signal are adjusted, if necessary, so that they are synchronised with the modulation of the wavelength of the signal I. In the event of using the embodiment of the optical signal generator unit 0 based on the use of a modulation signal generator 2 and a pulse generator 3, the adjustment of the synchronisation of the pulses of the pump H signal is achieved by adjusting the pulse generator 3 in a synchronised manner with the signal F.

    iii. The constant component of the wavelength separation of the probe I wave and pump H wave is adjusted to the desired value. Therefore, in the event of using the embodiment of the optical signal generator unit 0 that uses an optical signal generator 1 based on the use of two laser sources 14 and 15, the adjustment of the wavelength separation of the probe I and pulsed pump H optical signal may require adjusting the wavelength separation of the two sources 14 and 15. In the event of using the embodiment of the optical signal generator unit 0 that uses a pump pulse shaper 4 based on the use of a radio frequency pulse generator 20, the adjustment of the wavelength separation of the probe I and pulsed pump H optical signal may require adjusting, if necessary, the frequency of the pulsed sinusoidal signal generated by the generator 20. In the event of using the embodiment of the optical signal generator unit 0 that uses a probe wave generator 5 based on the use of an optical modulator 17 and a radio frequency generator 16, the adjustment of the wavelength separation of the probe I and pulsed pump H optical signal may require adjusting, if necessary, the frequency of the radio frequency generator 16.

    iv. The polarisation of the light of the probe I optical signal is adjusted to ensure efficient Brillouin interaction at all points of the fibre during the measurement. In the event of using the embodiment of the optical signal generator unit 0 based on the use of a polarisation controller 6, the adjustment of the polarisation of the light of the probe I optical signal is performed by adjusting the polarisation controller 6.

    v. The modulation of the optical source 24 is adjusted, if necessary, to generate a signal J that will give rise to a distribution of Brillouin gain spectra in the optical fibre that amplifies the pulses of the pulsed pump H signal.

    vi. The probe I optical signal is introduced through the opposite end of the optical fibre 7.

    vii. The pulsed pump H optical signal is introduced through the opposite end of the optical fibre 7.

    viii. The amplification J optical signal is introduced, if necessary.

ix. Brillouin interaction of the spectral components of the pump optical signal H and the probe optical signal I occurs in the optical fibre 7 that gives rise to an output optical wave E. Simultaneously, interaction occurs between the amplification optical signal J and the pump pulses H in the optical fibre 7.

x. The pump optical signal H and the output optical signal E are separated by means of a circulator 8 located at the input end of the optical signal H in the section of optical fibre 7.

xi. The output optical signal E is detected by means of a photoreceiver 9.

xii. The signal detected in the photoreceiver 9 is processed as necessary.

xiii. The data are recorded in the control system 10 and sent to the control system 11.

xiv. If more than one frequency of the Brillouin spectrum is to be characterised, stages (iii) to (xi) are repeated for a new adjustment of the wavelength separation of the probe optical signal I and pump optical signal H.

xv. The measurement data are processed in the control system 10 to obtain the distributed BFS measurement along the fibre and, where appropriate, the physical parameters of temperature and/or unit deformation.

Lastly, having described the device and the method of the present invention, in addition to some of its embodiments, and having described their main advantages over the state of the art, it should be noted that its application must not be understood to be limiting compared to other embodiments, by means of the appropriate variations or combinations of its elements, provided that said variations or combinations of its elements do not alter the essence of the invention and object thereof, which is exclusively defined by the accompanying claims.

**Claims**

1. A sensor for measuring the distribution of physical magnitudes in an optical fibre (7) comprising, at least:

    - an optical signal generator (1) configured to generate a first optical signal(s) (A) and a second optical signal(s) (B) that give rise, respectively, to at least one pulsed pump optical signal (H) and, at least, one probe optical signal (I);
    - a segment of optical fibre (7) wherein the probe optical signal(s) (I) interact(s) with the pulsed pump optical signal(s) (H);
    - a pulsing device (70) configured to pulse the first optical signal(s) (A) to form the pump optical signal(s) (H);
    - a probe wave generator (5) configured to generate the probe optical signal(s) (I) from the second optical signal(s) (B);
    - a photoreceiver (9) configured to detect the output optical signal (E) resulting from the interaction between the pump optical signal(s) (H) and the probe optical signal(s) (I);
    - an optical output signal processing unit (E) configured to obtain the characteristics of the interaction of the probe optical signal(s) (I) that interact with the pulsed pump optical signal(s) (H) along the optical fibre (7);

    **characterised in that** it further comprises:

    - a unit for reducing nonlocal effects and increasing the Brillouin threshold comprising a modulation signal generator (2) which enables wavelength modulation of at least one of the probe optical signal(s) (I) and/or at least one amplification optical signal (J) generated by at least one additional optical source (24), to offset the attenuation of the pump optical signal along the optical fibre.

2. The sensor, according to claim 1, **characterised in that** the modulation signal generator (2) is synchronised with the pulsing device (70), so that the wavelength modulation of at least one probe optical signal (I) is synchronised with the pulsation of the pump optical signal(s) (H).

3. The sensor, according to any of the preceding claims, **characterised in that** the modulation signal generator (2) is an electrical signal generator which injects an electrical signal into the optical signal generator (1) and is synchronised, in turn, with the pulsing device (70).

4. The sensor, according to any of claims 1 and 2, **characterised in that** the optical signal generator (1) comprises an optical phase modulator.

5. The sensor, according to any of the preceding claims, **characterised in that** it further comprises at least one optical source (24) configured to generate at least one amplification optical signal (J), to offset the attenuation of the pulsed pump optical signal (H) along the optical fibre (7).

6. The sensor, according to claim 5, **characterised in that** the amplification optical signal (J) emitted by said optical source (24) is modulated in wavelength by the modulation signal generator (2).

7. The sensor, according to claim 6, **characterised in that** the amplification optical signal (J) emitted by said optical source (24) is modulated in wavelength by an electrical current injected into said optical source (24).

8. The sensor, according to any of claims 6 and 7, wherein the modulation in wavelength of the amplification optical signal (J) is synchronised, in turn, with the pulse device (70).

9. The sensor, according to any of claims 5 or 6, **characterised in that** the amplification optical signal (J) is not modulated in wavelength.

10. A measuring method for measuring the distribution of physical magnitudes in an optical fibre using a sensor, according to any of claims 1 to 9, **characterised in that** it comprises the following stages:

    i. Modulating the wavelength of the probe (I) optical signal;
    ii. Synchronising the pulsation of the pulsed pump optical signal (H) with the modulation of the wavelength of the probe optical signal (I);
    iii. Setting the constant component of the wavelength separation of the probe optical signal (I) and pulsed pump optical signal (H);
    iv. Introducing the pulsed pump optical signal (H) through one end of an optical fibre segment (7);
    v. Introducing the probe optical signal (I) through the other end of the optical fibre (7);
    vi. Enabling the interaction of the pulsed pump optical signal (H) with the probe optical signal (I) in the optical fibre (7), which gives rise to an output optical signal (E);
    vii. Detecting the output optical signal (E) in the photoreceiver (9); and
    viii. Analysing and processing the output optical signal detected in the photoreceiver (9) by means of the output optical signal processing unit to obtain the distribution, along the optical fibre (7), of the module and/or the phase of the Brillouin interaction spectrum.

11. The measuring method, according to claim 10, **characterised in that** it comprises:

    - Stages (i) to (v) described above;
    - Introducing, through the same end of the optical fibre (7) wherethrough the probe optical signal (I) has been introduced, an amplification optical signal (J) to act as a Brillouin gain pump for the pulsed pump optical signal (H);
    - Stage (vi) described above;
    - Enabling the interaction of the pulsed pump optical signal (H) with the amplification optical signal (J) in the optical fibre (7); and
    - Stages (vii) and (viii) described above.

12. The measuring method, according to claim 10, **characterised in that** it comprises:

    - stages (i) to (v) described above;
    - modulating the amplification optical signal in wavelength;
    - introducing, through the same end of the optical fibre wherethrough the probe optical signal (I) has been introduced, an amplification optical signal (J) to act as a Brillouin gain pump for the pulsed pump optical signal (H);
    - stage (vi) described above;
    - enabling the interaction of the pulsed pump optical signal (H) with the amplification optical signal (J) in the optical fibre (7); and
    - Stages (vii) and (viii) described above.

13. A measurement method, according to any of claims 11 to 12, comprising:

    - stages (iii) to (v) described above;
    - introducing, through the same end of the optical fibre wherethrough the probe optical signal (I) has been introduced, an amplification optical signal (J) to act as a Brillouin gain pump for the pulsed pump optical signal (H);
    - stage (vi) described above;
    - enable the interaction of the pulsed pump optical signal (H) with the amplification optical signal (J) in the optical fibre (7); and
    - stages (vii) and (viii) described above.

**Patentansprüche**

1. Sensor zum Messen der Verteilung von physikalischen Größen in einer optischen Faser (7), umfassend zumindest:

    - einen Optiksignalgenerator (1), der dazu ausgelegt ist, ein oder mehrere erste Optiksignale (A) und ein oder mehrere zweite Optiksignale (B) zu erzeugen, die zumindest ein gepulstes Pumpoptiksignal (H) bzw. zumindest ein Sondenoptiksignal (I) hervorbringen;
    - ein Optikfasersegment (7), wobei das eine oder die mehreren Sondenoptiksignale (I) mit dem einen oder den mehreren gepulsten Pumpoptiksignalen (H) wechselwirken;
    - eine Pulsvorrichtung (70), die dazu ausgelegt ist, das eine oder die mehreren ersten Optiksignale (A) zu pulsen, um das eine oder die mehreren Pumpoptiksignale (H) zu bilden;
    - einen Sondenwellengenerator (5), der dazu ausgelegt ist, das eine oder die mehreren Sondenoptiksignale (I) aus dem einen oder den mehreren zweiten Optiksignalen (B) zu erzeugen;

- einen Fotoempfänger (9), der dazu ausgelegt ist, das Ausgabeoptiksignal (E), das aus der Wechselwirkung zwischen dem einen oder den mehreren Pumpoptiksignalen (H) und dem einen oder den mehreren Sondenoptiksignalen (I) entsteht, zu erfassen;

- eine Optikausgabesignalverarbeitungseinheit (E), die dazu ausgelegt ist, die Eigenschaften der Wechselwirkung des einen oder der mehreren Sondenoptiksignale (I), die mit dem einen oder den mehreren gepulsten Pumpoptiksignalen (H) entlang der Optikfaser (7) wechselwirken, zu erhalten;

**dadurch gekennzeichnet, dass** er weiter umfasst:

- eine Einheit zum Reduzieren nichtlokaler Effekte und Erhöhen der Brillouin-Grenze, umfassend einen Modulationssignalgenerator (2), der Wellenlängenmodulation von zumindest einem des einen oder der mehreren Sondenoptiksignale (I) und/oder zumindest einem Verstärkungsoptiksignal (J) ermöglicht, das durch zumindest eine zusätzliche Optikquelle (24) erzeugt wird, um die Abschwächung des Pumpoptiksignals entlang der optischen Faser zu versetzen.

2. Sensor nach Anspruch 1, **dadurch gekennzeichnet, dass** der Modulationssignalgenerator (2) mit der Pulsvorrichtung (70) synchronisiert ist, sodass die Wellenlängenmodulation von zumindest einem Sondenoptiksignal (I) mit der Pulsation des einen oder der mehreren Pumpoptiksignale (H) synchronisiert ist.

3. Sensor nach einem der vorstehenden Ansprüche, **dadurch gekennzeichnet, dass** der Modulationssignalgenerator (2) ein Generator eines elektrischen Signals ist, der ein elektrisches Signal in den Optiksignalgenerator (1) einkoppelt und seinerseits mit der Pulsvorrichtung (70) synchronisiert ist.

4. Sensor nach einem der Ansprüche 1 und 2, **dadurch gekennzeichnet, dass** der Optiksignalgenerator (1) einen Optikphasenmodulator umfasst.

5. Sensor nach einem der vorstehenden Ansprüche, **dadurch gekennzeichnet, dass** er weiter zumindest eine Optikquelle (24) umfasst, die dazu ausgelegt ist, zumindest ein Verstärkungsoptiksignal (J) zu erzeugen, um die Abschwächung des gepulsten Pumpoptiksignals (H) entlang der Optikfaser (7) zu versetzen.

6. Sensor nach Anspruch 5, **dadurch gekennzeichnet, dass** die Wellenlänge des Verstärkungsoptiksignals (J), das durch die Optikquelle (24) abgegeben wird, durch den Modulationssignalgenerator (2) moduliert wird.

7. Sensor nach Anspruch 6, **dadurch gekennzeichnet, dass** die Wellenlänge des Verstärkungsoptiksignals (J), das durch die Optikquelle (24) abgegeben wird, durch einen elektrischen Strom moduliert wird, der in die Optikquelle (24) eingekoppelt ist.

8. Sensor nach einem der Ansprüche 6 und 7, wobei die Modulation der Wellenlänge des Verstärkungsoptiksignals (J) ihrerseits mit der Pulsvorrichtung (70) synchronisiert ist.

9. Sensor nach einem der Ansprüche 5 oder 6, **dadurch gekennzeichnet, dass** die Wellenlänge des Verstärkungsoptiksignals (J) nicht moduliert wird.

10. Messverfahren zum Messen der Verteilung von physikalischen Größen in einer Optikfaser unter Verwendung eines Sensors nach einem der Ansprüche 1 bis 9, **dadurch gekennzeichnet, dass** es die folgenden Schritte umfasst:

i. Modulieren der Wellenlänge des Sondenoptiksignals (I);
ii. Synchronisieren der Pulsation des gepulsten Pumpoptiksignals (H) mit der Modulation der Wellenlänge des Sondenoptiksignals (I);
iii. Einstellen der konstanten Komponente der Wellenlängentrennung des Sondenoptiksignals (I) und des gepulsten Pumpoptiksignals (H);
iv. Einbringen des gepulsten Pumpoptiksignals (H) durch ein Ende eines Optikfasersegments (7);
v. Einbringen des Sondenoptiksignals (I) durch das andere Ende der Optikfaser (7);
vi. Ermöglichen der Wechselwirkung des gepulsten Pumpoptiksignals (H) mit dem Sondenoptiksignal (I) in der Optikfaser (7), die ein Ausgabeoptiksignal (E) hervorbringt;
vii. Erfassen des Ausgabeoptiksignals (E) in dem Fotoempfänger (9); und
viii. Analysieren und Verarbeiten des in dem Fotoempfänger (9) erfassten Ausgabeoptiksignals mittels der Ausgabeoptiksignalverarbeitungseinheit, um die Verteilung des Moduls entlang der Optikfaser (7) und/oder die Phase des Brillouin-Wechselwirkungsspektrums zu erhalten.

11. Messverfahren nach Anspruch 10, **dadurch gekennzeichnet, das** es umfasst:

- die oben beschriebenen Schritte (i) bis (v);
- Einbringen eines Verstärkungsoptiksignals (J), das als Brillouin-Steigerungspumpe für das gepulste Pumpoptiksignal (H) wirken soll, durch dasselbe Ende der Optikfaser (7), durch das das Sondenoptiksignal (I) eingebracht wurde;
- den oben beschriebenen Schritt (vi);
- Ermöglichen der Wechselwirkung des gepulsten Pumpoptiksignals (H) mit dem Verstärkungsoptiksignal (J) in der Optikfaser (7); und
- die oben beschriebenen Schritte (vii) und (viii).

12. Messverfahren nach Anspruch 10, **dadurch gekennzeichnet, dass** es umfasst:

- die oben beschriebenen Schritte (i) bis (v);
- Modulieren der Wellenlänge des Verstärkungsoptiksignals;
- Einbringen eines Verstärkungsoptiksignals (J), das als Brillouin-Steigerungspumpe für das gepulste Pumpoptiksignal (H) wirken soll, durch dasselbe Ende der Optikfaser, durch das das Sondenoptiksignal (I) eingebracht wurde;
- den oben beschriebenen Schritt (vi);
- Ermöglichen der Wechselwirkung des gepulsten Pumpoptiksignals (H) mit dem Verstärkungsoptiksignal (J) in der Optikfaser (7); und
- die oben beschriebenen Schritte (vii) und (viii).

13. Messverfahren nach einem der Ansprüche 11 bis 12, umfassend:

- die oben beschriebenen Schritte (iii) bis (v);
- Einbringen eines Verstärkungsoptiksignals (J), das als Brillouin-Steigerungspumpe für das gepulste Pumpoptiksignal (H) wirken soll, durch dasselbe Ende der Optikfaser, durch das das Sondenoptiksignal (I) eingebracht wurde;
- den oben beschriebenen Schritt (vi);
- Ermöglichen der Wechselwirkung des gepulsten Pumpoptiksignals (H) mit dem Verstärkungsoptiksignal (J) in der Optikfaser (7); und
- die oben beschriebenen Schritte (vii) und (viii).

**Revendications**

1. Un capteur pour mesurer la distribution de magnitudes physiques dans une fibre optique (7) comprenant, au moins :

- un générateur de signal optique (1) configuré pour générer un premier/s signal/aux optique/s (A) et un second/s signal/aux optique/s (B) qui donnent lieu à, respectivement, au moins un signal optique de pompe pulsée (H) et, au moins, un signal optique de sonde (I) ;
- un segment de fibre optique (7) dans lequel le/s signal/aux optique/s de sonde (I) interagisse/nt avec le/s signal/aux optique/s de pompe impulsée/s (H) ;
- un dispositif de pulsation (70) configuré pour pulser le/s premier/s signal/aux optique/s (A) pour former le/s signal/aux optique/s de pompe (H) ;
- un générateur d'ondes de sonde (5) configuré pour générer le/s signal/aux optique/s de sonde (I) à partir du/des second/s signal/aux optique/s (B) ;
- un photorécepteur (9) configuré pour détecter le signal optique de sortie (E) résultant de l'interaction entre le/s signal/aux optique/s de pompe (H) et le/s signal/aux optique/s de sonde (I) ;
- une unité de traitement optique de signal de sortie (E) configurée pour obtenir les caractéristiques de l'interaction de/s signal/aux optique/s de sonde (I) qui interagisse/nt avec le/s signal/aux optique/s de pompe pulsée/s (H) le long de la fibre optique (7) ;

**caractérisé en ce qu'**il comprend en outre :

- une unité pour réduire les effets non locaux et augmenter le seuil Brillouin comprenant un générateur de signal de modulation (2) qui permet la modulation de la longueur d'onde d'au moins l'un des signaux optiques de sonde (I) et/ou au moins d'un signal optique d'amplification (J) généré par au moins une source optique supplémentaire (24), pour compenser l'atténuation du signal optique de pompe le long de la fibre optique.

2. Le capteur, selon la revendication 1, **caractérisé en ce que** le générateur de signal de modulation (2) est synchronisé avec le dispositif de pulsation (70), pour que la modulation de la longueur d'onde d'au moins un signal optique de sonde (I) soit synchronisée avec la pulsation du/des signal/aux optique/s de pompe (H).

3. Le capteur, selon l'une quelconque des revendications précédentes, **caractérisé en ce que** le générateur de signal de modulation (2) est un générateur de signal électrique qui injecte un signal électrique dans le générateur de signal optique (1) et qui, à son tour, est synchronisé avec le dispositif de pulsation (70).

4. Le capteur, selon l'une quelconque des revendications 1 et 2, **caractérisé en ce que** le générateur de signal optique (1) comprend un modulateur de phase optique.

5. Le capteur, selon l'une quelconque des revendications précédentes, **caractérisé en ce qu'**il comprend en outre au moins une source optique (24) configurée pour générer au moins un signal optique d'amplification (J), pour compenser l'atténuation du signal optique de pompe pulsée (H) le long de la fibre optique (7).

**6.** Le capteur, selon la revendication 5, **caractérisé en ce que** le signal optique d'amplification (J) émis par ladite source optique (24) est modulé en longueur d'onde par le générateur de signal de modulation (2).

**7.** Le capteur, selon la revendication 6, **caractérisé en ce que** le signal optique d'amplification (J) émis par ladite source optique (24) est modulé en longueur d'onde par un courant électrique injecté dans ladite source optique (24).

**8.** Le capteur, selon l'une quelconque des revendications 6 et 7, dans lequel la modulation en longueur d'onde du signal optique d'amplification (J) est synchronisée, à son tour, avec le dispositif de pulsation (70).

**9.** Le capteur, selon l'une quelconque des revendications 5 ou 6, **caractérisé en ce que** le signal optique d'amplification (J) n'est pas modulé en longueur d'onde.

**10.** Un procédé de mesure pour mesurer la distribution de magnitudes physiques dans une fibre optique utilisant un capteur, selon l'une quelconque des revendications 1 à 9, **caractérisé en ce qu'**il comprend les étapes suivantes :

    i. Moduler la longueur d'onde du signal optique de sonde (I) ;
    ii. Synchroniser la pulsation du signal optique de pompe pulsée (H) avec la modulation de la longueur d'onde du signal optique de sonde (I) ;
    iii. Fixer le composant constant de la séparation de longueur d'onde du signal optique de sonde (I) et du signal optique de pompe pulsée (H) ;
    iv. Introduire le signal optique de pompe impulsé (H) à travers d'une extrémité d'un segment de fibre optique (7) ;
    v. Introduire le signal optique de sonde (I) à travers de l'autre extrémité de la fibre optique (7) ;
    vi. Permettre l'interaction du signal optique de pompe pulsée (H) avec le signal optique de sonde (I) dans la fibre optique (7), qui donne lieu à un signal optique de sortie (E) ;
    vii. Détecter le signal optique de sortie (E) dans le photorécepteur (9) ; et
    viii. Analyser et traiter le signal optique de sortie détecté dans le photorécepteur (9) au moyen de l'unité de traitement du signal optique de sortie pour obtenir la distribution, le long de la fibre optique (7), du module et/ou de la phase du spectre d'interaction Brillouin.

**11.** Le procédé de mesure, selon la revendication 10, **caractérisé en ce qu'**il comprend :

    - Les étapes (i) à (v) décrites ci-dessus ;
    - Introduire, à travers de la même extrémité de la fibre optique (7) par où le signal optique de sonde (I) a été introduit, un signal optique d'amplification (J) pour qu'il fasse fonction de pompe de gain Brillouin pour le signal optique de pompe pulsée (H) ;
    - L'étape (vi) décrite ci-dessus ;
    - Permettre l'interaction du signal optique de pompe pulsée (H) avec le signal optique d'amplification (J) dans la fibre optique (7) ; et
    - Les étapes (vii) et (viii) décrites ci-dessus.

**12.** Le procédé de mesure, selon la revendication 10, **caractérisé en ce qu'**il comprend :

    - Les étapes (i) à (v) décrites ci-dessus ;
    - Moduler le signal optique d'amplification en longueur d'onde ;
    - Introduire, à travers de la même extrémité de la fibre optique par où le signal optique de sonde (I) a été introduit, un signal optique d'amplification (J) pour qu'il fasse fonction de pompe de gain Brillouin pour le signal optique de pompe pulsée (H) ;
    - L'étape (vi) décrite ci-dessus ;
    - Permettre l'interaction du signal optique de pompe pulsée (H) avec le signal optique d'amplification (J) dans la fibre optique (7) ; et
    - Les étapes (vii) et (viii) décrites ci-dessus.

**13.** Un procédé de mesure, selon l'une quelconque des revendications 11 à 12, comprenant :

    - Les étapes (iii) à (v) décrites ci-dessus ;
    - Introduire, à travers de la même extrémité de la fibre optique par où le signal optique de sonde (I) a été introduit, un signal optique d'amplification (J) pour qu'il fasse fonction de pompe de gain Brillouin pour le signal optique de pompe pulsée (H) ;
    - L'étape (vi) décrite ci-dessus ;
    - Permettre l'interaction du signal optique de pompe pulsée (H) avec le signal optique d'amplification (J) dans la fibre optique (7) ; et
    - Les étapes (vii) et (viii) décrites ci-dessus.

Fig. 1 (Prior art)

**Fig. 2a (prior art)**

**Fig. 2b (prior art)**

**Fig. 3**

Fig. 4a

Fig. 4b

Fig. 5a

**Fig. 6**

Fig. 7a

Fig. 7b

Fig. 7c

EP 3 150 969 B1

Fig. 8

Fig. 9

EP 3 150 969 B1

Fig. 10

Fig. 11

F

A

B

1

Fig. 12

F

A

B

1

Fig. 13

**B** → **17** → **G**

**16**

**Fig. 14**

C ⇩

**4**

**A** → **18** → **D**

**Fig. 15**

C

4

20

A

19

D

**Fig. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4997277 A
- WO 201210101592 A
- EP 1959247 A2
- EP 2708856 A
- EP 2708856 A1
- EP 2068126 A1
- WO 2014012411 A1

**Non-patent literature cited in the description**

- **THEVENAZ L.** *Optics Expulse,* 2013, vol. 21, 14017-14035
- **K. SHIRAKI et al.** SBS threshold of a fibre with a Brillouin frequency shift distribution. *J. Lightw. Technol.,* 1996, vol. 14 (1), 50-57